# EUROPÄISCHE PATENTANMELDUNG

(11) **EP 2 461 093 A2**
(43) Veröffentlichungstag der Anmeldung: **06.06.2012**
(21) Anmeldenummer: 11189473.9
(22) Anmeldetag: 17.11.2011
(51) Int. Cl.: F21V 14/08

(54) **Kraftfahrzeugscheinwerfer mit einem Projektionslichtmodul und einem Mehrpunkt-Blendenstellmechanismus**

(30) Priorität: 01.12.2010 DE 102010062278
(71) Anmelder: Automotive Lighting Reutlingen GmbH, 72762 Reutlingen (DE)
(72) Erfinder: Brendle, Matthias, 72074 Tübingen (DE)
(74) Vertreter: Dreiss

(57) **Zusammenfassung**

Kraftfahrzeugscheinwerfer (10) mit einem Projektionslichtmodul (16) mit einer Blende (22) und einem Stellelement (25), das mit der Blende (22) mechanisch gekoppelt und dazu eingerichtet ist, die Blende (22) gegen eine Rückstellkraft (F_40) zu verstellen, die durch ein elastisches Element (40) erzeugt wird. Der Scheinwerfer zeichnet sich dadurch aus, dass das Projektionslichtmodul (16) wenigstens ein weiteres elastisches Element (42) aufweist, das unter einer Vorspannung steht und so mit dem elastischen Element (40) gekoppelt ist, dass es sich längs eines ersten Abschnittes eines Verformungsweges (s_25) des ersten elastischen Elements (40) ebenfalls verformt, und sich längs eines zweiten Abschnittes des Verformungsweges (s_25) des ersten elastischen Elements (40) nicht verformt, wobei die bei der jeweiligen Verformung erzeugten Rückstellkräfte (F_40, F_42) der beiden elastischen Elemente (40, 42) entgegengesetzt zueinander gerichtet sind.

## Beschreibung

Die vorliegende Erfindung betrifft einen Kraftfahrzeugscheinwerfer nach dem Oberbegriff des Anspruchs 1.

Ein solcher Scheinwerfer ist per se bekannt und weist ein Projektionslichtmodul auf, das dazu eingerichtet ist, eine Blendenkante einer Blende des Projektionslichtmoduls als Hell-Dunkel-Grenze einer von dem Projektionslichtmodul erzeugten Lichtverteilung in ein Vorfeld des Scheinwerfers abzubilden. Darüber hinaus weist er ein Stellelement auf, das mit der Blende mechanisch gekoppelt und dazu eingerichtet ist, eine Stellkraft zu erzeugen, mit der die Blende gegen eine Rückstellkraft verstellbar ist, die durch eine Verformung von wenigstens einem elastischen Element erzeugt wird.

Es gibt heute Projektionssysteme für Fahrzeugscheinwerfer, die durch Umschalten zwischen verschiedenen Blendenpositionen verschiedene Lichtverteilungen und Hell-Dunkel-Grenzen auf die Straße projizieren können. Am häufigsten sind Systeme, bei denen die gängigen Scheinwerfer-Hauptfunktionen, nämlich Abblendlicht und Fernlicht, in einem Lichtmodul erzeugt werden. Die unterschiedlichen Lichtfunktionen werden dabei meist durch motorisch verstellbare Blenden realisiert, die in der Blendenebene eines Projektionssystems angeordnet sind. Die einzelnen Lichtverteilungen werden durch gezielte Abschattung von Lichtbündeln realisiert, die mit Halogen-oder Xenonlampen, neuerdings auch mit Halbleiterlichtquellen wie LED-Lichtquellen erzeugt werden.

Darüber hinaus ist es bekannt, das herkömmliche Abblendlicht durch weitere Abblendlichtfunktionen zu ergänzen, die beispielsweise situationsabhängig auf einer Fahrbahn eine höhere Reichweite des Scheinwerfers zulassen. Entsprechende Lichtmodule und Blendenmechanismen sind beispielsweise aus der DE 103 61 234 A1, der DE 10 2005 012 303 A1 oder der EP 1 637 395 B1 bekannt. Für die Verstellung der Blenden werden meist Schrittmotoren eingesetzt. Diese Antriebe erlauben es, die entsprechenden Blenden feinfühlig zu verstellen, so dass eine Vielzahl verschiedener Lichtverteilungen durch ein einziges Projektionsmodul erzeugt werden können.

Die aus den genannten Schriften bekannten Gegenstände weisen jedoch den Nachteil auf, vergleichsweise aufwändig zu sein, da sie einen Schrittmotor, ein Getriebe und eine Schrittmotoransteuerung sowie üblicherweise eine Sensorik zur Überwachung der Schrittmotorbewegung benötigen.

Während diese erste Generation von AFS-Systemen (AFS = Adaptive Frontlighting System) die oben aufgezeigte große Variabilität in Bezug auf die Einstellung verschiedener Hell-Dunkel-Grenzen bietet, hat sich zwischenzeitlich herausgestellt, dass sich der überwiegende Teil der gewünschten Lichtfunktionen mit zwei unterschiedlichen Hell-Dunkel-Grenzen sowie mit Fernlicht darstellen lässt.

Damit ist es möglich, die Lichtmodule deutlich zu vereinfachen und vor allem die aufwändigen Schrittmotoren für die Blendenverstellung einzusparen und durch vergleichsweise billige Elektromagneten zu ersetzen.

Dies gilt insbesondere, wenn diese Hell-Dunkel-Grenzen ergänzend mit der Leuchtweitenregulierung (LWR) vertikal verstellt werden können. Die Druckschriften DE 10 2004 044 113 A1 und DE 10 2005 059 861 A1 zeigen mögliche Ausführungsformen derartiger Lichtmodule. Die in den genannten Schriften beschriebenen Lichtmodule haben den Nachteil, dass sie anstelle des Schrittmotors zwei Aktuatoren benötigen, um drei Lichtfunktionen zu realisieren, beispielsweise Landstraßenlicht, Autobahnlicht und Fernlicht.

Dies stellt nach wie vor einen erheblichen konstruktiven und wirtschaftlichen Aufwand dar.

Vor diesem Hintergrund besteht die Aufgabe der Erfindung in der Angabe eines Scheinwerfers der eingangs genannten Art, der eine Einstellung verschiedener Lichtverteilungen erlaubt, die sich durch eine Lage ihrer Hell-Dunkel-Grenze unterscheiden, und der sich mit einem vergleichsweise geringeren konstruktiven und wirtschaftlichen Aufwand realisieren lässt.

Diese Aufgabe wird mit den Merkmalen des Anspruchs 1 gelöst. Von dem eingangs genannten, per se bekannten Stand der Technik unterscheidet sich die vorliegende Erfindung dadurch, dass das Projektionslichtmodul zusätzlich zu einem ersten elastischen Element wenigstens ein weiteres elastisches Element aufweist, das unter einer Vorspannung steht und so mit dem ersten elastischen Element und der Blende gekoppelt ist, dass es sich bei einer längs eines ersten Abschnittes eines Verformungsweges des ersten elastischen Elements erfolgenden Verformung des ersten elastischen Elements verformt, und sich bei einer längs eines zweiten Abschnittes des Verformungsweges des ersten elastischen Elements erfolgenden Verformung des ersten elastischen Elements nicht verformt, und dass die bei der jeweiligen Verformung erzeugten und an der Blende angreifenden Rückstellkräfte des ersten elastischen Elements und des wenigstens einen weiteren elastischen Elements in Bezug auf die Richtungen, mit denen sie an der Blende angreifen, entgegengesetzt zueinander gerichtet sind.

Durch diese Merkmale werden zunächst die an der Blende wirksamen Rückstellkräfte des ersten elastischen Elements und des zweiten elastischen Elements zu einer resultierenden Rückstellkraft überlagert. Dabei erfolgt die Überlagerung so, dass sich eine Kraft-Weg-Kennlinie der resultierenden Rückstellkraft ergibt, die Bereiche aufweist, in denen Änderungen der Rückstellkraft proportional zu Änderungen der Auslenkung des Stellelements ist und dass sich zumindest ein zwischen zwei solchen Bereichen liegender Bereich ergibt, in dem Änderungen der Stellkraft nicht mit Änderungen der Auslenkung des Stellelements einhergehen. Die an der Blende wirksamen Rückstellkräfte können dabei nach Betrag und Richtung von den Rückstellkräften abweichen, die sich direkt an den elastischen Elementen als Folge von deren Verformung ergeben. Solche Abweichungen treten insbesondere bei einer mechanischen Übersetzung und/oder Umlenkung auf, die zwischen dem jeweiligen elastischen Element und der Blende wirksam ist. An der Blende entfaltet das erste elastische Element jedenfalls eine der Stellkraft des Stellelements entgegengesetzt gerichtete Wirkung, während das zweite elastische Element eine der Stellkraft des Stellelements gleichgerichtete Wirkung entfaltet.

Da die resultierende Rückstellkraft für eine Veränderung der Blendenposition durch die vom Stellelement aufzubringende Stellkraft überwunden werden muss, besitzt der erfindungsgemäße Scheinwerfer die Eigenschaft, dass es einen Kraftbereich gibt, in dem eine Schwankung der einwirkenden Kräfte keine Veränderung der Lage des Stellelements und damit auch keine Veränderung der Lage der Hell-Dunkel-Grenze bewirkt. Das bedeutet insbesondere, dass dann, wenn die Stellkraft in diesem Bereich liegt, zusätzlich einwirkende Reibungs- und Trägheitskräfte keine Veränderung der Blendenposition bewirken. Dies gilt solange, wie die Summe dieser Kräfte und der Stellkraft innerhalb des genannten Bereichs liegt. Die Lage dieses Bereiches ist in Bezug auf die Auslenkung des Stellelements und damit auch in Bezug auf die Lage der Blende reproduzierbar und genau festgelegt.

Die Erfindung erlaubt damit die Einstellung einer Lage der Hell-Dunkel-Grenze, die reproduzierbar genau zwischen den Hell-Dunkel-Grenzen liegt, die sich bei stellkraftlosem Zustand und beim Zustand maximaler Stellkraft des Stellelements, also bei den beiden Endlagen des Stellelements ergeben. Unter der Voraussetzung, dass die Endlagen durch ortsfeste Anschläge für die Auslenkung des Stellelements festgelegt sind, lassen sich damit wenigstens drei definierte Lagen der Blende mit nur einem einzigen, einfachen Stellelement einstellen. Die Position der Zwischenlage wird dabei durch die konstruktiv vorgebbaren Längen des ersten Abschnitts und des weiteren Abschnitts festgelegt.

Die Breite des Kraftbereichs wird durch die Vorspannung des weiteren elastischen Elements festgelegt. Eine Sensorik zur Positionsüberwachung ist nicht erforderlich. Die Endlagen der Blende können durch die genannten festen Anschläge festgelegt werden. Die Zwischenlage der Blende wird bei der Erfindung gewissermaßen durch einen Federanschlag festgelegt, der sich durch die Merkmale des Anspruchs 1 ergibt. Durch Verwenden mehrerer weiterer elastischer Elemente, die jeweils für sich die Merkmale des Anspruchs 1 erfüllen, können weitere Federanschläge erzeugt werden, mit denen sich weitere Zwischenlagen der Hell-Dunkel-Grenze einstellen lassen.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Figur 1: das technische Umfeld der Erfindung in Form eines Kraftfahrzeugscheinwerfers in einer schematischen Seitenansicht;
- Figur 2: eine Ausgestaltung eines Stellelementes zusammen mit einer Blende im Rahmen eines ersten Ausführungsbeispiels der Erfindung;
- Figur 3: eine Abwandlung des Gegenstands der Figur 2;
- Figur 4: Kraft-Weg-Kennlinien elastischer Elemente gemäß einem Ausführungsbeispiel der Erfindung;
- Figur 5: ein Ausführungsbeispiel der Erfindung mit einer Blende und einer Zusatzblende;
- Figur 6: eine Abwandlung des Ausführungsbeispiels der Figur 5, das eine andere Form der Hell-DunkelGrenzen liefert;
- Figur 7: eine perspektivische Ansicht eines Projektionslichtmoduls gemäß einem weiteren Ausführungsbeispiel der Erfindung;
- Figur 8: eine Draufsicht auf den Reflektor und die Blendenbaugruppe des Projektionslichtmoduls aus der Figur 7 in einer Abblendlichtstellung der Blenden;
- Figur 9: den Gegenstand der Figur 8 mit einer zur Erzeugung einer Autobahnlichtverteilung leicht abgesenkten Blende;
- Figur 10: den Gegenstand der Figur 9 mit einer in eine Fernlichtstellung bewegten Blende;
- Figur 11: eine Blendenanordnung mit einer Blende und einer Zusatzblende in einer perspektivischen Ansicht;
- Figur 12: den Gegenstand der Figur 11 in einer aufeinander bezogenen Anordnung der Blenden für Abblendlicht;
- Figur 13: den Gegenstand der Figur 12 in einer Anordnung der Blenden für Autobahnlicht; und
- Figur 14: Ersatzschaltbilder eines Magnetaktors als Stellelement der Blendenanordnung.

Dabei bezeichnen gleiche Bezugszeichen in verschiedenen Figuren jeweils gleiche oder zumindest ihrer Funktion nach gleiche Elemente.

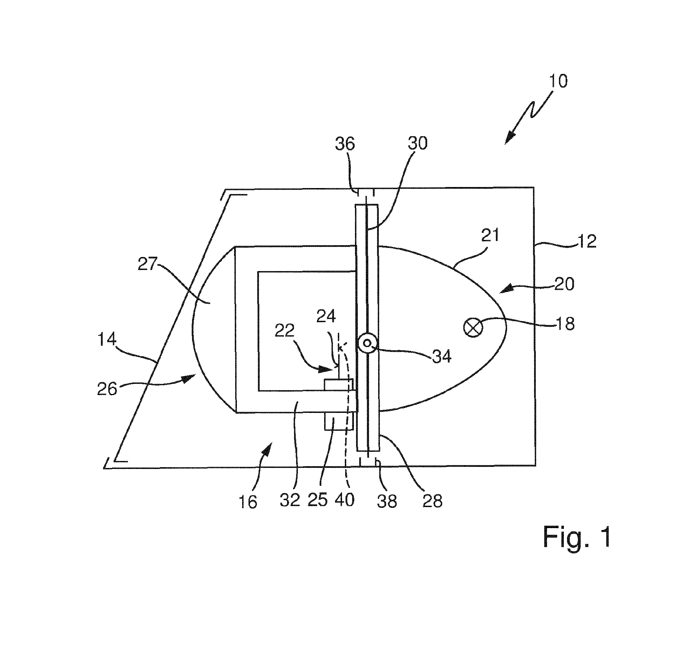

Im Einzelnen zeigt die Figur 1 das technische Umfeld der Erfindung in Form eines Kraftfahrzeugscheinwerfers 10 in einer schematischen Seitenansicht. Der Kraftfahrzeugscheinwerfer 10 weist ein Gehäuse 12 auf, das eine Lichtaustrittsöffnung besitzt. Die Lichtaustrittsöffnung wird von einer transparenten Abdeckscheibe 14 abgedeckt. Im Inneren des Gehäuses 12 ist ein Projektionslichtmodul 16 angeordnet. Das Projektionslichtmodul 16 weist insbesondere eine Lichtquelle 18, eine Primäroptik 20, eine bewegliche Blende 22 mit einer Blendenkante 24 und einem Stellelement 25, eine Sekundäroptik 26, einen ersten Halterahmen 28, optional einen zweiten Halterahmen 30 und einen Linsenhalter 32 auf. Zusätzlich zu dem Projektionslichtmodul 16 kann der Scheinwerfer 10 auch weitere Lichtmodule aufweisen.

Die Primäroptik 20 ist in der dargestellten Ausgestaltung ein Reflektor 21, in dem die Lichtquelle 18 angeordnet ist und gehalten wird. Die Sekundäroptik 26 ist in der dargestellten Ausgestaltung eine Abbildungslinse 27, die vom Linsenhalter 32 gehalten wird. Der Linsenhalter 32 ist entweder an dem ersten Halterahmen 28 oder am Reflektor 21 befestigt. Der Reflektor 21 ist am ersten Halterahmen 28 befestigt. Die Blende 22 ist mit einem festen Ende direkt oder indirekt ebenfalls am ersten Halterahmen 28 befestigt.

Der erste Halterahmen ist um eine durch Horizontaldrehlager 34 definierte horizontale Achse schwenkbar, um zum Beispiel eine Leuchtweitenregelung zu erlauben. Die Horizontaldrehlager 34 sind, je nachdem ob das Projektionslichtmodul 16 einen zweiten Halterahmen 30 aufweist oder nicht, entweder mit dem zweiten Halterahmen 30 oder mit dem Gehäuse 12 verbunden. Ein gegebenenfalls vorhandener zweiter Halterahmen 30 ist bevorzugt um eine durch Vertikaldrehlager 36, 38 definierte vertikale Achse schwenkbar.

Dabei wird unter einer horizontalen Achse eine Achse verstanden, die bei einer bestimmungsgemäßen Verwendung des Scheinwerfers 10 im Kraftfahrzeug parallel zum Horizont und quer zur Fahrtrichtung liegt. Eine vertikale Achse liegt entsprechend quer zur horizontalen Achse und zur Fahrtrichtung.

Die Lichtquelle 18 ist bevorzugt eine Gasentladungslampe oder eine Glühlampe oder eine Halbleiterlichtquelle oder eine Anordnung von mehreren Halbleiterlichtquellen und ist in einem Brennpunkt des Reflektors 21 angeordnet. Als Halbleiterlichtquellen werden in Kraftfahrzeugen und so auch hier insbesondere Lumineszenzdioden (LED) verwendet.

Der Reflektor 21 ist bevorzugt ein Reflektor, der den Lichtstrom der Lichtquelle 18 in eine erste Lichtverteilung bündelt, die in einer Blendenebene des Projektionslichtmoduls 16 liegt. Die Blendenebene ist die Ebene im Raum, in der sich die Blendenkante 24 bewegt. Der Reflektor 21 weist zu diesem Zweck eine elliptische Grundform auf, wobei die Lichtquelle 18 in dem einen Brennpunkt der elliptischen Grundform und die optisch wirksame Blendenkante 24 im Bereich des zweiten Brennpunkts der elliptischen Grundform angeordnet ist. Formen realer Reflektoren 21 können von der elliptischen Grundform abweichen. Reale Reflektoren 21 sind häufig als Polyellipsoid-Reflektoren oder Freiform-Reflektoren realisiert, die die Bedingung erfüllen, aus dem Lichtstrom der Lichtquelle 18 eine erste, in der Blendenebene 40 liegende Lichtverteilung zu erzeugen.

Die Sekundäroptik 26 ist meist als abbildende Linse 27 realisiert, die die erste Lichtverteilung in eine zweite Lichtverteilung abbildet, die im Vorfeld des Projektionslichtmoduls 16 liegt und bei dessen bestimmungsgemäßer Verwendung zur Beleuchtung des Fahrzeugvorfelds dient. Die Sekundäroptik 26 ist in der Regel eine Sammellinse, zum Beispiel eine plan-konvexe Linse 27, deren Abstand zur Blende 22 so gewählt ist, dass ihr Brennpunkt in der ersten Lichtverteilung liegt.

Wenn sich die bewegliche Blendenkante 24 innerhalb der ersten Lichtverteilung befindet, wird ein Teil der ersten Lichtverteilung abgeschattet. Die Blendenkante 24 wird als Hell-Dunkel-Grenze in der zweiten Lichtverteilung abgebildet und erzeugt so eine Abblendlichtverteilung, unter der hier jede Lichtverteilung verstanden wird, bei der die Blende eine abschattende Wirkung entfaltet.

Beispiele solcher Lichtverteilungen sind Nebellichtverteilungen, Landstraßenlichtverteilungen, Autobahnlichtverteilungen und Teilfernlichtverteilungen, ohne dass diese Liste als abschließend verstanden werden soll. Befindet sich die bewegliche Blendenkante 24 dagegen außerhalb der ersten Lichtverteilung, wird als zweite Lichtverteilung eine Fernlichtverteilung erzeugt, die keine Hell-Dunkel-Grenze aufweist.

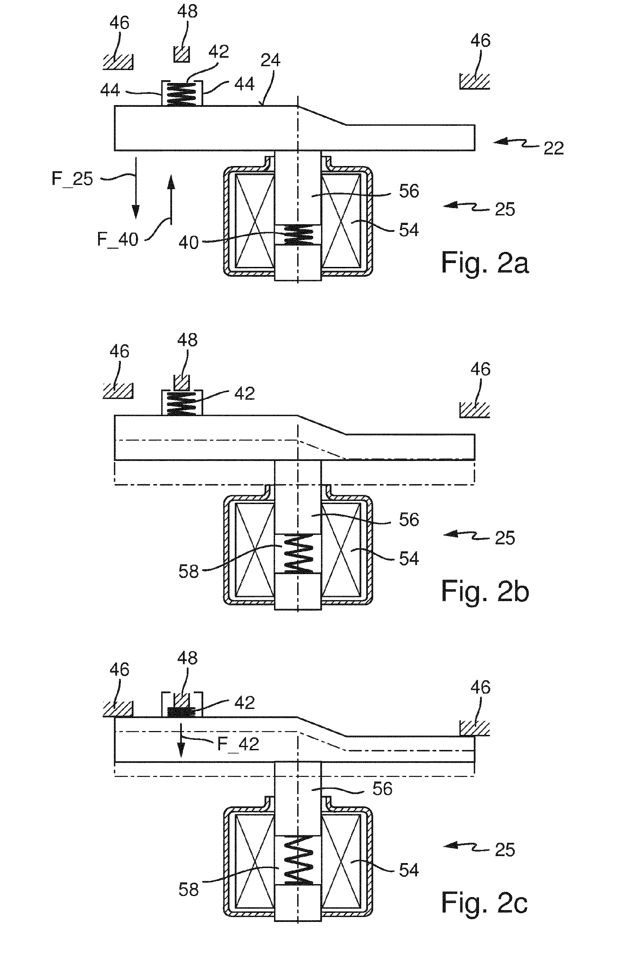

Die Figur 2 zeigt eine Ausgestaltung eines Stellelementes 25 zusammen mit einer Blende 22 im Rahmen eines ersten Ausführungsbeispiels der Erfindung. Die Blende 22 und das Stellelement 25 bilden eine Blendenbaugruppe, die bevorzugt so orientiert ist, wie es in der Figur 1 dargestellt ist, so dass die bewegliche Blende 22 von dem Stellelement 25 in der Blendenebene des Projektionslichtmoduls vertikal verstellbar ist. Das Stellelement 25 ist mit der Blende 22 mechanisch gekoppelt und dazu eingerichtet, eine Stellkraft F_25 erzeugen, mit der die Blende gegen eine Rückstellkraft F_40 verstellbar ist, die durch eine Verformung von wenigstens einem elastischen Element 40 erzeugt wird. Das elastische Element 40 ist in einer bevorzugten Ausgestaltung eine metallische Feder.

In der Ausgestaltung, die in der Figur 2 dargestellt ist, weist die Blendenbaugruppe ein weiteres elastisches Element 42 auf. Das weitere elastische Element 42 steht unter einer Vorspannung. Diese Vorspannung wird beim Ausführungsbeispiel, das in der Figur 2 dargestellt ist, dadurch erzeugt, dass sich das elastische Element 42 mit einem seiner beiden Enden an der Blendenkante 24 abstützt und dass es sich mit dem anderen seiner beiden Enden an Spannelementen 44 abstützt, die fest mit der Blendenkante 24 verbunden sind. Festanschläge 46 und 48 sind ortsfest im Projektionslichtmodul 16 angeordnet, zum Beispiel am ersten Halterahmen 28 oder am starr mit dem Halterahmen 28 verbundenen Reflektor 21.

Figur 2a zeigt die Blendenanordnung in einem Zustand, in dem die Stellkraft F_25 größer als die entgegengesetzt gerichtete Rückstellkraft F_40 ist. Dies entspricht einem Zustand des Stellelementes 25, in dem dieses seine maximale Stellkraft bereitstellt. Die Blende 22 befindet sich in diesem Zustand in einer ihrer beiden Endlagen, die in der dargestellten Ausgestaltung durch ein Anliegen der Blende 22 am Stellelement 25 definiert ist. Bei einem Reduzieren der Stellkraft F 25 löst sich die Blende 22 unter dem Einfluss der Rückstellkraft F_40 des ersten elastischen Elemente 40 aus dieser Endlage und bewegt sich auf die Anschläge 46 und 48 zu.

Figur 2b zeigt einen Zustand, bei dem sich die Blende 22 in einer Zwischenlage befindet, die durch ein Anliegen des weiteren elastischen Elementes 42 an dem Anschlag 48 definiert ist. Durch die Vorspannung des zweiten elastischen Elementes ergibt sich im Zusammenwirken des zweiten elastischen Elementes 42 mit dem Anschlag 48 ein Federanschlag, der sich dadurch auszeichnet, dass die Position der Blende 22 über eine gewisse Variationsbreite der Stellkraft F_25 konstant bleibt, so dass die durch den Federanschlag definierte Position der Blende 22 gegenüber Änderungen der einwirkenden Kräfte, deren Summe noch in dem genannten Bereich bleibt, unempfindlich ist.

Das bedeutet, dass die Blende 22 auch bei Schwankungen der einwirkenden Kraft, die zum Beispiel durch Reibungs- und/oder Trägheitskräfte hervorgerufen werden, ihre durch den Federanschlag definierte Position beibehält. Dies wird weiter unten noch näher erläutert.

Bei einer weiteren Reduzierung der Stellkraft F_25 sinkt die Summe der in die gleiche Richtung wirkenden Kräfte F_25 des Stellelements 25 und der Kraft F_42 des weiteren elastischen Elements 42 unter den Wert der Rückstellkraft F_40 des ersten elastischen Elements 40. Dies führt dazu, dass die Blende 22 gegen die Kraft F_42 des weiteren elastischen Elementes 42 an die Festanschläge 46 angelegt wird, was einer zweiten Endlage der Blende 22 entspricht. Dies ist in der Figur 2c dargestellt.

Der in der Figur 2c dargestellte Zustand ergibt sich insbesondere dann, wenn das Stellelement 25 nur eine kleine oder gar keine Stellkraft F_25 bereitstellt. In einer bevorzugten Ausgestaltung, wie sie in der Figur 2 dargestellt ist, befindet sich die Blende 22 bei einem Verschwinden der Stellkraft F_25 des Stellelements 25 in einer höchstmöglichen Position, in der sie an den Festanschlägen 46 anliegt und in der das Projektionslichtmodul 16 bevorzugt eine Abblendlichtverteilung erzeugt. Bei der Geometrie üblicher Projektionssysteme wird die Blende 22 seitenverkehrt und auf dem Kopf stehend in der vor dem Kraftfahrzeug erzeugten Lichtverteilung abgebildet. Im Ergebnis wird die sich vor dem Kraftfahrzeug einstellende Hell-Dunkel-Grenze durch das Anlegen der Blende 22 an die Festanschläge 46 abgesenkt. Dies hat den Vorteil, dass bei einer Fehlfunktion des Stellelements 25, bei der dieses keine Stellkraft mehr bereitstellt, eine Blendung anderer Verkehrsteilnehmer weitgehend ausgeschlossen wird.

Der in der Figur 2c dargestellte Zustand entspricht insofern einem initialen Zustand oder Ausgangszustand der Blendenanordnung. In diesem Zustand ist das erste elastische Element 40 maximal entspannt. Beim Übergang vom Zustand, der in der Figur 2c dargestellt ist, zum Zustand, der in der Figur 2a dargestellt ist, lassen sich zwei Abschnitte des Verformungsweges des ersten elastischen Elements 40 unterscheiden. Der erste Abschnitt entspricht dem Verformungsweg, den das erste elastische Element 40 beim Übergang vom Zustand der Figur 2c in den Zustand der Figur 2b erfährt. Dieser erste Abschnitt zeichnet sich dadurch aus, dass parallel zu einer Verformung des ersten elastischen Elementes auch eine Verformung des zweiten elastischen Elementes auftritt. Während das erste elastische Element 40 beim Übergang vom Zustand der Figur 2c in den Zustand der Figur 2b gespannt wird, entspannt sich das zweite elastische Element 42 während dieses ersten Abschnittes. Das Ende des ersten Abschnittes ist dann erreicht, wenn sich das zweite elastische Element 42 von seinem Anschlag 48 löst, was beim Übergang vom Zustand der Figur 2b in den Zustand der Figur 2a der Fall ist. Der beim Übergang vom Zustand der Figur 2b in den Zustand der Figur 2a auftretende Verformungsweg des ersten elastischen Elementes 40 entspricht einem zweiten Abschnitt des Verformungsweges des ersten elastischen Elementes 40.

Die Figur 2 zeigt damit insbesondere eine Blendenanordnung eines Projektionslichtmoduls 16, das dazu eingerichtet ist, eine Blendekante 24 einer Blende 22 des Projektionslichtmoduls 16 als Hell-Dunkel-Grenze einer von dem Projektionslichtmodul 16 erzeugten Lichtverteilung in ein Vorfeld eines Scheinwerfers 10 abzubilden und das ein Stellelement 25 aufweist, das mit der Blende 22 mechanisch verkoppelt und dazu eingerichtet ist, eine Stellkraft F_25 zu erzeugen, mit der die Blende 22 gegen eine Rückstellkraft F_40 verstellbar ist, die durch eine Verformung von wenigstens einem elastischen Element 40 erzeugt wird, wobei das Projektionslichtmodul zusätzlich zu einem ersten elastischen Element 40 wenigstens ein weiteres elastisches Element 42 aufweist, das unter einer Vorspannung steht und so mit dem ersten elastischen Element 40 und der Blende 22 gekoppelt ist, das es sich bei einer längs eines ersten Abschnittes eines Verformungsweges des ersten elastischen Elements erfolgenden Verformung des ersten elastischen Elements verformt, und sich bei einer längs eines zweiten Abschnittes des Verformungsweges des ersten elastischen Elementes erfolgenden Verformung des ersten elastischen Elements nicht verformt, und wobei die bei der jeweiligen Verformung erzeugten und an der Blende 22 angreifenden Rückstellkräfte F_40, F_42 des ersten elastischen Elements 40 und des zweiten elastischen Elements 42 in Bezug auf die Richtungen, mit denen sie an der Blende 22 angreifen, entgegengesetzt zueinander gerichtet sind.

Die Kopplung zwischen dem ersten elastischen Element 40 und dem zweiten elastischen Element 42 ergibt sich bei der Ausgestaltung, die in der Figur 2 dargestellt ist, dadurch, dass beide elastische Elemente in einem ersten Abschnitt des gesamten Verformungsweges des ersten elastischen Elements 40 gemeinsam auf die Blende 22 einwirken.

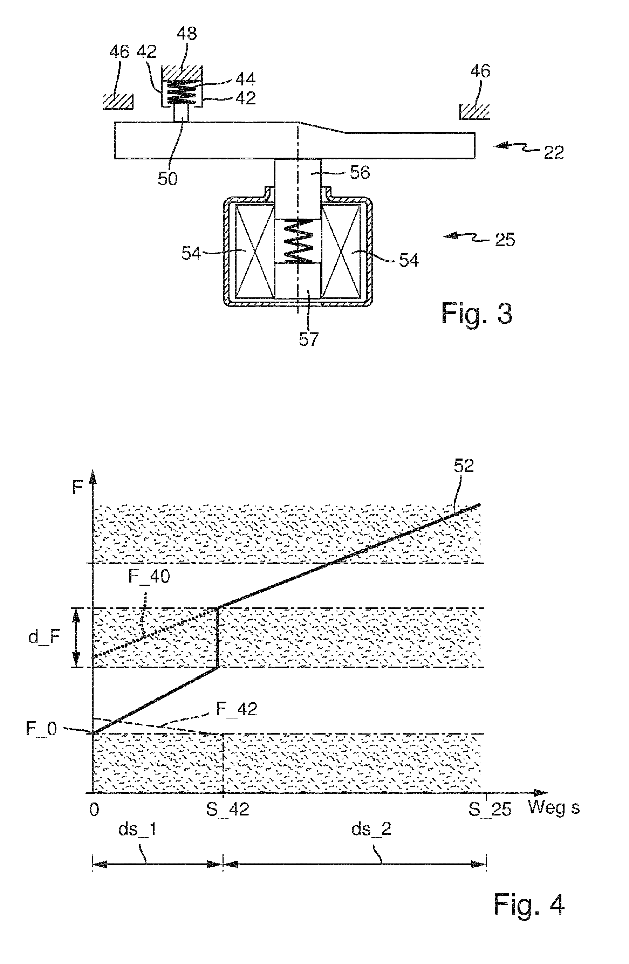

Eine solche Kopplung ergibt sich auch beim Gegenstand der Figur 3, die eine Abwandlung des Gegenstands der Figur 2 darstellt. Der Gegenstand der Figur 3 unterscheidet sich vom Gegenstand der Figur 2 durch eine Umkehrung der Anordnung des zweiten elastischen Elements 42 und des mit dem zweiten elastischen Element 42 zusammenwirkenden Festanschlags 48. Während der Festanschlag 48 beim Gegenstand der Figur 2 ortsfest im Projektionsmodul angeordnet ist und das zweite elastische Element 42 an der Blende 22 befestigt ist, hat man beim Gegenstand der Figur 3 das weitere elastische Element 42 ortsfest im Projektionsmodul 16 befestigt und ein mit dem weiteren elastischen Element 44 zusammenwirkendes Anschlagelement 50 an der Blende 22 befestigt.

Figur 4 zeigt Kraft-Weg-Kennlinien elastischer Elemente gemäß einem Ausführungsbeispiel der Erfindung. Dabei ist die Kraft F über den Weg s aufgetragen. Man hätte auch eine Auftragung des Weges S über der Kraft F wählen können, da die Stellkraft F_25 die Stellgröße ist, mit der der Weg S der Blende 22 eingestellt wird. Letztlich sind aber beide Darstellungen austauschbar. Der Weg s = 0 entspricht der Stellung der Blende 22, die in der Figur 2c dargestellt ist und in der das Stellelement 22 noch keine Stellkraft liefert. Die gepunktete Linie repräsentiert den Verlauf der Rückstellkraft F_40 des ersten elastischen Elementes 40 bei einer Bewegung der Blende 22 von der in der Figur 2c dargestellten Stellung in die Figur 2b dargestellte Stellung. Der Wert der Rückstellkraft F_40 ist beim Weg s = 0 größer als Null. Dies bedeutet, dass das elastische Element 40 bereits in der Stellung, die in der Figur 2c dargestellt ist, eine Vorspannung besitzt.

Die gestrichelte Linie repräsentiert den Verlauf der Rückstellkraft F_42 des zweiten elastischen Elementes 42. Die Steigungen der beiden Kraft-Weg-Kennlinien der Kräfte F_40 und F_42 besitzen entgegengesetztes Vorzeichen, was bedeutet, dass die Kräfte in entgegengesetzter Richtung wirken. Die Kennlinie 52 repräsentiert den Verlauf der resultierenden Rückstellkraft die sich dadurch ergibt, dass der Betrag der Kraft F_42 des zweiten elastischen Elementes 42 vom Wert der Rückstellkraft F_40 des ersten elastischen Elementes 40 subtrahiert wird.

Die Wegmarke s_42 entspricht der Blendenposition, die in der Figur 2b dargestellt ist. In dieser Position der Blende 22 liegt das zweite elastische Element 42 an seinem Anschlag 48 an. Die Wegmarke s_25 entspricht der in der Figur 2a dargestellte Stellung der Blende 22. In dieser Position liegt die Blende 22 an einem durch das Stellelement 25 gebildeten Anschlag an und das erste elastische Element 40 besitzt seine größte Spannung.

Für bestimmte, vom Stellelement 25 aufzubringende Werte der Stellkraft liefert der Verlauf der Kurve 52 jeweils den zugehörigen Wert s der Position der Blende 22. Wenn die Stellkraft gleich Null ist, befindet sich das System in der stabilen Endlage, die in der Figur 2c dargestellt ist. Diese ergibt sich dadurch, dass das erste elastische Element 40 in dieser Lage bereits vorgespannt ist und seine Kraft betragsmäßig größer als die entgegengesetzt gerichtete Kraft des zweiten elastischen Elements 42 ist. Die resultierende Kraft 52, die die Blende 22 und das Stellelement 25 in seine stabile Endlage drückt, ist die Differenz aus den Beträgen der Kräfte der elastischen Elemente.

Mit zunehmender Stellkraft des Stellelementes 25 bewegt sich die Blende 22 zunächst nicht. Die Blende 22 bewegt sich erst dann, wenn der Wert der Stellkraft den Wert F_0 erreicht. Bei weiter ansteigender Stellkraft ist die resultierende Auslenkung der Blende 22 aus der in Figur 2c dargestellten Endlage zunächst proportional zum weiteren Kraftanstieg. Das erste elastische Element 40 wird dabei gespannt, während das zweite elastische Element 42 dabei entspannt wird. Dies erfolgt solange, bis das zweite elastische Element 42 den durch seine Spannelemente 44 definierten Vorspannungsanschlag erreicht. Ab diesem Punkt kann sich das zweite elastische Element 42 nicht weiter entspannen.

Bis zu diesem Punkt der Bewegung waren die Stellkraft F_25 des Stellelementes 25 und die Kraft F_42 des zweiten elastischen Elements 42 parallel gerichtet und haben sich addiert. Beim Erreichen des durch die Spannelemente 44 definierten Federanschlags fällt die die Stellkraft F_25 unterstützende Kraft F_42 des zweiten elastischen Elements 42 weg, da sie von den Spannelementen 42 aufgenommen wird. Die weiter steigende Stellkraft F_25 reicht dann allein zunächst nicht aus, um das erste elastische Element 40 weiter zu spannen. Das bedeutet, dass die Stellbewegung zunächst stoppt. Die Blende 22 bewegt sich auch bei weiter zunehmender Stellkraft F_25 zunächst nicht.

Mit weiter zunehmender Stellkraft F_25 des Stellelementes 25 erreicht die Stellkraft F_25 schließlich auch ohne die unterstützende Kraft F_42 den Wert der Rückstellkraft F_40 des ersten elastischen Elementes 40. Ab diesem Punkt wird das erste elastische Element 40 bei weiter ansteigender Stellkraft F_25 weiter gespannt, so dass sich die Auslenkung der Blende 22 wieder verändert.

Der Wegpunkt bei dem sich die Stellkraft F_25 in einem Intervall d_F verändern kann, ohne dass sich die Auslenkung s von der Blende 22 ändert, bildet einen Rastpunkt der Stellbewegung der Blende 22. Die Auslenkung s_42 kann auch bei Schwankungen der Stellkraft stabil eingestellt werden, solange die auf die Blende 22 einwirkende Summe aus Stellkraft und Trägheitskraft und Reibungskräften innerhalb des Intervalls d_F liegt. Dadurch wird die Möglichkeit bereitgestellt, mit einem einfachen Stellelement 25, das selbst nur die zwei Endlagen in den Stellpositionen s = 0 und s = s 25 besitzt, drei Positionen der Blende 22 stabil einzustellen.

Der Weg zwischen den Wegmarken s = 0 und s = s 25 entspricht dem gesamten Verformungsweg des ersten elastischen Elementes 40. Der Weg ds_1 zwischen den Wegmarken s = 0 und s = s_42 entspricht einem ersten Abschnitt dieses Verformungsweges und der Weg ds_2 zwischen den Wegmarken s_42 und s_25 entspricht einem zweiten Abschnitt dieses Verformungsweges.

Das Stellelement 25 ist in einer bevorzugten Ausgestaltung ein elektromagnetisches Stellelement, das dazu eingerichtet ist, eine steuerbare Stellkraft zu erzeugen. Die Figuren 2 und 3 zeigen eine Ausgestaltung, bei der das Stellelement 25 ein elektromagnetischer Schubkraftaktor ist. Ein solches Stellelement 25 weist stromleitende Wicklungen 54 und einen beweglichen Anker 56 sowie einen feststehenden Teil 57 eines Eisenkerns auf. Bei einem Stromfluss durch die Wicklungen 54 ergibt sich eine Reluktanzkraft, die den beweglichen Anker 56 in den Innenraum 58 treibt, um den Luftspalt zwischen dem beweglichen Anker 56 und dem feststehenden Teil 57 des Eisenkerns zu verringern.

In der Ausgestaltung, die in den Figuren 2 und 3 dargestellt ist, ist das elastische Element 40 im Innenraum 58 angeordnet und stützt sich auf dem unbeweglichen Teil 57 des Eisenkerns ab. In einer bevorzugten Ausgestaltung ist das Stellelement 25 dazu eingerichtet, eine Einstellung von wenigstens zwei von Null verschiedenen Stellkraftwerten zu erlauben. In Bezug auf die Kennlinie 52 aus der Figur 4 ist das zum einen die maximale Stellkraft, mit der die maximale Auslenkung s_25 erreicht wird, und zum anderen eine mittlere Stellkraft, die im Bereich d_F liegt und mit der die Auslenkung s_42 reproduzierbar genau einstellbar ist.

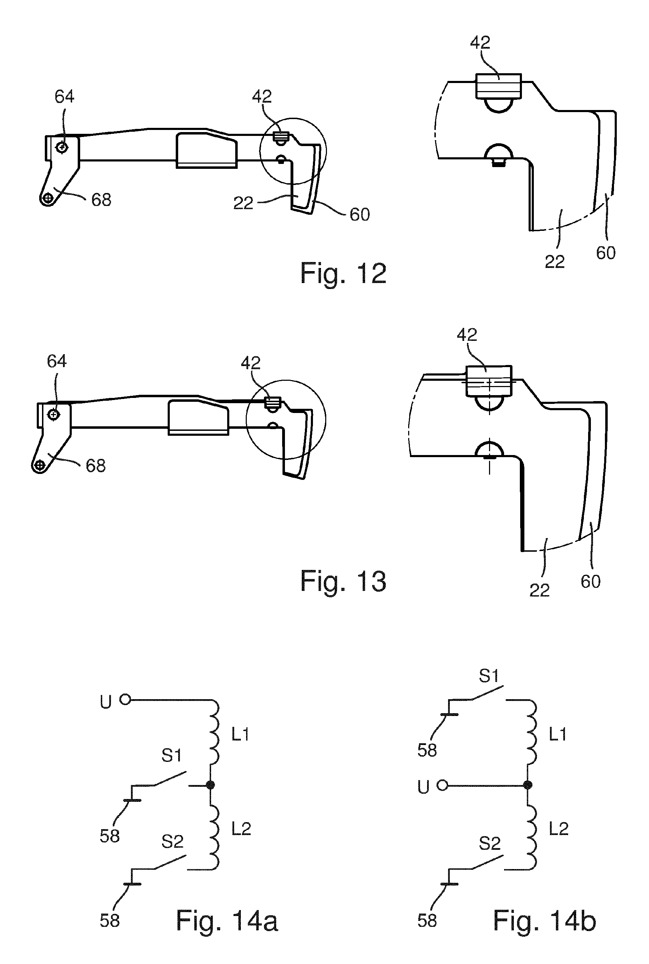

Figur 14 zeigt Ersatzschaltbilder eines elektromagnetischen Schubkraftaktors, der als Stellelement 25 verwendbar ist. Figur 14a zeigt eine Reihenschaltung von Induktivitäten L1 und L2, die in einer Ausgestaltung eine Wicklung 54 eines Stellelementes 25 bilden. Die Reihenschaltung liegt zwischen einer Spannung U und einer Masse 58, wobei Schalter S1 und S2 die Einstellung von Schaltzuständen erlauben, in denen entweder nur die Induktivität L1 oder aber beide Induktivitäten L1 und L2 von Strom durchflossen werden.

Je nachdem, ob nur die Induktivität L1 oder aber beide Induktivitäten L1 und L2 eingeschaltet sind, ergibt sich ein erster Stellkraftwert oder ein zweiter Stellkraftwert. Der erste Stellkraftwert liegt zum Beispiel im Bereich d_F aus der Figur 4 und erlaubt damit eine reproduzierbar genaue Einstellung der Auslenkung s_42. Der zweite Stellkraftwert entspricht zum Beispiel der Maximalkraft und erlaubt damit eine Einstellung der Auslenkung S_25.

Bei ausgeschalteten Wicklungen L1 und L2 fällt die Stellkraft F_25 weg und die Blende 22 wird vom ersten elastischen Element 40 in die in der Figur 2c dargestellte Position mit Auslenkung s = 0 geschoben. Figur 14b zeigt eine alternativ verwendete Ausgestaltung, bei der Induktivitäten L1, L2 einzeln oder parallel eingeschaltet werden können. Bei unterschiedlichen Werten der Induktivitäten L1, L2 lassen sich damit drei Stellkraftwerte einstellen, je nachdem ob nur die Induktivität L1, nur die Induktivität L2, oder aber beide Induktivitäten L1 und L2 eingeschaltet sind.

Das in den Figuren dargestellte Stellelement 25 ist ein Magnetaktor, der eine Einstellung von wenigstens zwei von Null verschiedenen Stellkraftwerten erlaubt. In einer alternativen Ausgestaltung ist das Stellelement 25 ein Elektromotor, insbesondere ein Gleichstrommotor, für den aber auch die Forderung gilt, dass er die Einstellung von wenigstens zwei von Null verschiedenen Stellkraftwerten erlaubt.

Die bis hier beschriebenen Ausführungsbeispiele weisen einen Federanschlag auf, der eine Einstellung einer einzelnen Zwischenposition s_42 der Blende 22 erlaubt. In einer alternativen Ausgestaltung weist das Projektionsmodul 16 n weitere elastische Elemente auf, von denen jedes unter einer Vorspannung steht und so mit dem ersten elastischen Element oder einem anderen der weiteren elastischen Elemente gekoppelt ist, dass es sich bei einer längs eines ersten Abschnittes eines Verformungsweges des ersten elastischen Elements erfolgenden Verformung des ersten elastischen Elements verformt und sich bei einer längs seines zugeordneten weiteren Abschnittes des Verformungsweges des ersten elastischen Elements erfolgenden Verformung des ersten elastischen Elements nicht verformt, und dass die bei der jeweiligen Verformung erzeugten Rückstellkräfte des ersten elastischen Elements und des weiteren elastischen Elements entgegengesetzt zueinander gerichtet sind.

Bevorzugt ist auch, dass für solche Ausgestaltungen ein Stellelement verwendet wird, das dazu eingerichtet ist, bei n + 1 magnetischen Durchflutungsniveaus betrieben zu werden. Die verschiedenen magnetischen Durchflutungsniveaus ergeben sich dabei dadurch, dass unterschiedliche viele Induktivitäten eines Stellelementes 25 eingeschaltet sind.

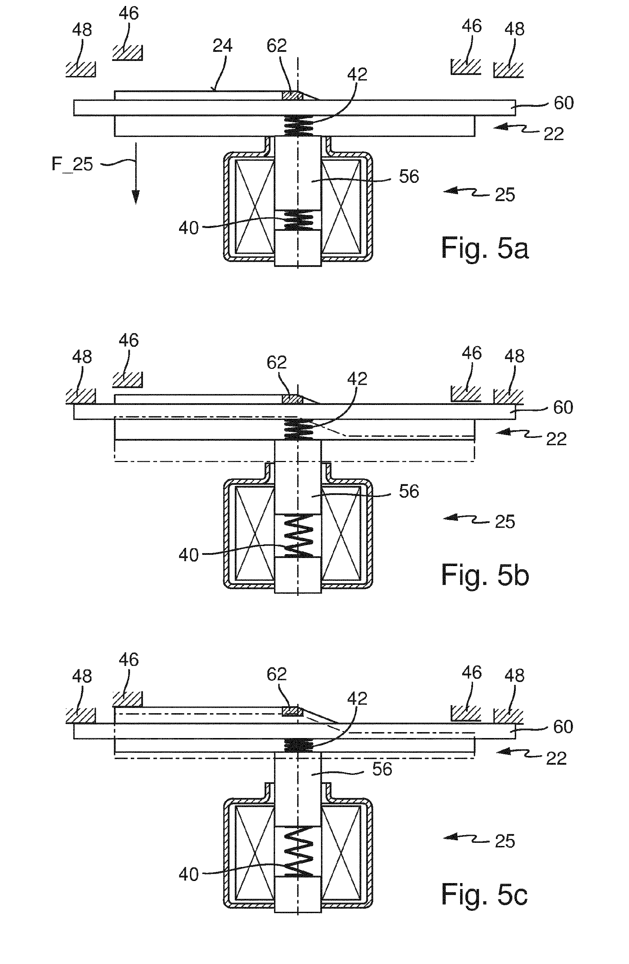

Figur 5 zeigt eine Ausgestaltung, bei der der Scheinwerfer 10 eine mit dem Stellelement 25 verbundene Blende 22 und eine relativ zu der Blende 22 bewegbare Zusatzblende 60 aufweist. Dabei ist das weitere elastische Element 42 zwischen dem Anker 56 des Stellelements 25 und der Zusatzblende 60 und damit insbesondere auch zwischen der mit dem Anker 56 des Stellelements 25 fest verbundenen Blende 22 und der Zusatzblende 60 angeordnet. Die Blende 22 weist ein Spannelement 62 auf, das eine Bewegung der Zusatzblende 60 relativ zur Blende 22 beschränkt und welche das weitere elastische Element 42 unter einer Vorspannung hält.

Figur 5a zeigt den Zustand dieser Anordnung bei maximaler Stellkraft F_25 des Stellelements 25. Entsprechend diesem Stellkraftwert befindet sich die Blende 22 in ihrer maximal ausgelenkten Position s_25, was bedeutet, dass die Blende 22 an einem durch das Stellelement 25 gebildeten Anschlag anliegt. Das weitere elastische Element 42 schiebt in dieser Stellung die Zusatzblende 60 gegen das Spannelement 62, so dass sich eine Vorspannung des weiteren elastischen Elements 42 ergibt.

Die Figur 5b zeigt den Zustand der Anordnung in der Stellposition s_42, in der die Zusatzblende 60 an Anschlägen 48 und am Spannelement 62 anliegt. In dieser Stellung wird die vom weiteren elastischen Element 42 über die Zusatzblende 60 auf das Spannelement 62 ausgeübte Vorspannkraft allmählich von den Anschlägen 48 übernommen, wobei sich ein Stellkraftintervall d_F ergibt, in dem die Blende 22 und auch die Zusatzblende 60 in der Stellposition s_42 verharrt.

Bei weiter abnehmender Stellkraft schiebt das erste elastische Element 40 die Blende 22 in die in der Figur 5c gezeigte Stellung, in der die Blende 22 an Anschlägen 46 anliegt. Die Anschläge 46 und 48 sind ortsfest im Projektionsmodul angeordnet und zum Beispiel mit dem Reflektor 21 oder dem Halterahmen 28 starr verbunden.

Die Kennlinie der Figur 4 gilt auch für den Gegenstand der Figur 5. Der Weg zwischen den Auslenkungen s = 0 und s = s_42 entspricht einem ersten Abschnitt ds_1des Verformungsweges des ersten elastischen Elements 40, in dem beide elastischen Elemente 40 und 42 verformt werden. In einem zweiten Abschnitt ds_2, der von der Auslenkung s_42 bis zur maximalen Auslenkung s_25 des ersten elastischen Elements 40 und der Blende 22 reicht, wird das zweite elastische Element 42 nicht mehr verformt, da es an einem durch das Spannelement 62 gebildeten Anschlag anliegt und von der Blende 22 mitgenommen wird.

Sowohl das Ausführungsbeispiel nach der Figur 2 als auch das Ausführungsbeispiel nach der Figur 5 erlauben das Einstellen von drei Positionen einer Blende 22, wobei eine zwischen den Endlagen der Blende 22 liegende Position mit Hilfe eines Federanschlags definiert wird.

Ein wesentlicher Unterschied zwischen den Gegenständen der Figuren 2 und 5 liegt darin, dass die Zusatzblende nach der Figur 5 zusätzlich noch eine Veränderung der Form der Hell-Dunkel-Grenze erlaubt. So zeigt die Figur 5c eine Anordnung der Blende 60 und der Zusatzblende 22, in der das Projektionsmodul 16 eine Abblendlichtverteilung erzeugt.

Figur 5 stellt dabei eine Ansicht dar, die sich einem Betrachter bietet, der von außen durch die Projektionslinse 27 hindurch in den Scheinwerfer 10 hineinblickt. Auf einem von dem Scheinwerfer 10 beleuchteten Schirm wird die Blendenanordnung aus der Figur 5 wie auch die übrigen in dieser Anmeldung dargestellten Blendenanordnungen seitenverkehrt und auf dem Kopf stehend abgebildet. Ein Absenken der Blende bedeutet demnach eine Erhöhung der Reichweite des vom Scheinwerfer 10 ausgehenden Lichtes durch eine Erhöhung der Hell-Dunkel-Grenze.

Beim Übergang von der Blendenanordnung der Figur 5c zur Blendenanordnung der Figur 5b wird die Blende 22 abgesenkt. Dabei bleibt die Zusatzblende 60 zunächst noch in ihrer durch die Anschläge 48 definierten Position. Auf der rechten Seite der Blendenanordnung, wie sie sich in der Figur 5 darstellt, sinkt die resultierende Blendenkante dadurch weniger stark ab als auf der linken Seite der Figur 5. Das bedeutet insgesamt, dass die Reichweite des Lichts auf der Gegenverkehrsseite stärker erhöht wird als auf der eigenen Verkehrsseite. Dies ist für eine Autobahnlichtverteilung typisch, bei der eine über Rückspiegel des vorausfahrenden Fahrzeugs erfolgende Blendung von dessen Fahrer vermieden werden soll.

Figur 5a zeigt eine Blendenanordnung mit vollständig abgesenkter Blende 22 und auch vollständig abgesenkter Zusatzblende 60. Dies entspricht zum Beispiel einer Fernlichtstellung. Figur 5 zeigt damit insbesondere eine Blendenanordnung eines Projektionslichtmoduls 16 mit dem sich drei Lichtfunktionen, nämlich Abblendlicht, Autobahnlicht und Fernlicht realisieren lassen. Ein solches Projektionslichtmodul 16 wird auch als Trifunktionslichtmodul bezeichnet.

Aber auch ein Lichtmodul, das eine Blendenanordnung aufweist, wie sie in der Figur 2 dargestellt ist, stellt eine Ausgestaltung eines solchen Trifunktionslichtmoduls dar. Wesentlich ist jeweils, dass durch die Einstellung von drei Blendenpositionen drei Lichtfunktionen realisiert werden können, wobei diese drei Lichtfunktionen typischerweise die von üblichen Bifunktionslichtmodulen bekannten Abblendlichtfunktion und Fernlichtfunktion sind, die dann durch eine dritte Lichtfunktion ergänzt werden. Dabei hat die Ausgestaltung der Figur 5 gegenüber der Ausgestaltung der Figur 2 den Vorteil, dass nicht nur die Höhe der Hell-Dunkel-Grenze auf eine stabile Zwischenposition zwischen der Abblendlichtstellung und der Fernlichtstellung eingestellt werden kann, sondern dass zusätzlich auch noch die Form der Hell-Dunkel-Grenze variabel ist.

Diese Variabilität erlaubt zum Beispiel die Realisierung einer dritten Lichtfunktion in Form einer Autobahnlichtverteilung, wobei durch die Form der Zusatzblende 60 selektiv vorgegeben werden kann, ob die Reichweite auf der Gegenverkehrsseite stärker erhöht werden soll als auf der eigenen Verkehrsseite oder umgekehrt.

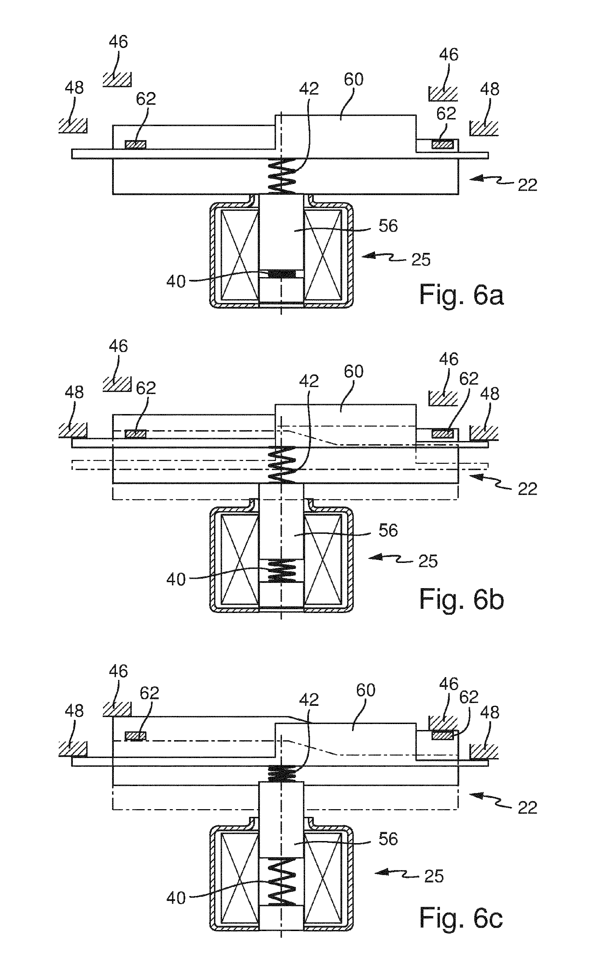

Die Figur 6 zeigt eine Blendenanordnung, die von ihrer Funktion her mit dem Gegenstand der Figur 5 vergleichbar ist, weil sie sowohl eine Blende 22 als auch eine Zusatzblende 60 aufweist. Vom Gegenstand der Figur 5 unterscheidet sich der Gegenstand der Figur 6 durch die Form der Zusatzblende, die beim Gegenstand der Figur 6 asymmetrisch ist und eine Stufe auf einer Fahrbahnseite aufweist. Eine solche Zusatzblende 60 kann auch als Teilfernlicht-Zusatzblende bezeichnet werden.

In der Zwischenstellung, also in der Auslenkung s_42, die in der Figur 2b dargestellt ist, schattet die Teilfernlicht-Zusatzblende 60 eine Fahrbahnseite mit Hilfe einer vertikalen Hell-Dunkel-Grenze ab. Dadurch kann selektiv die Blendung auf der Gegenverkehrsseite oder auf der eigenen Verkehrsseite vermieden werden.

Insgesamt zeigt Figur 6 eine Blendenanordnung für ein Trifunktionslichtmodul dessen Stellung a) einer Fernlichtstellung entspricht, dessen Stellung b) einer Teilfernlichtstellung, bei der die Gegenverkehrsseite stärker ausgeleuchtet wird als die eigene Verkehrsseite und dessen Stellung c) einer Landstraßenlichtstellung entspricht.

Dabei begrenzen Spannelemente 62 die Bewegung der Zusatzblende 60 gegenüber der Blende 22 so, dass eine Vorspannung des weiteren elastischen Elements 42 sichergestellt ist. Das elastische Element 42 befindet sich in der dargestellten Ausgestaltung zwischen der Zusatzblende 60 und dem Anker 56 des Stellelements 25.

Im Übrigen entspricht die Kinematik der Blendenanordnung aus der Figur 6 der bereits im Zusammenhang mit den Figuren 2, 4 und 5 ausführlich dargestellten Kinematik, bei der sich die Kraft-Weg-Kennlinie 52 aus der Figur 4 einstellt, die ein Kraftintervall d_f aufweist, in dem Änderungen der Stellkraft keine Änderung der Auslenkung s_42 zur Folge haben. Die Stellung b) in der Figur 6 entspricht dieser Auslenkung s_42.

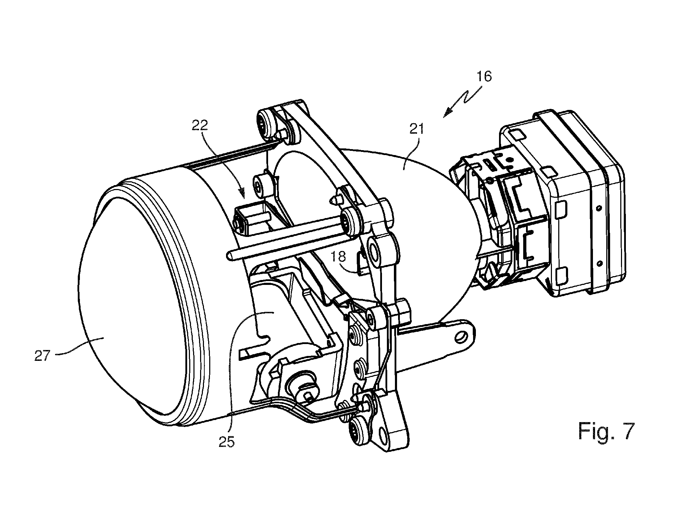

Figur 7 zeigt eine weitere Ausgestaltung eines Projektionslichtmoduls 16, bei der eine Blende 22 drehbar an einem Reflektor 21 angelenkt und über eine Hebelmechanik von einem Stellelement 25 betätig wird.

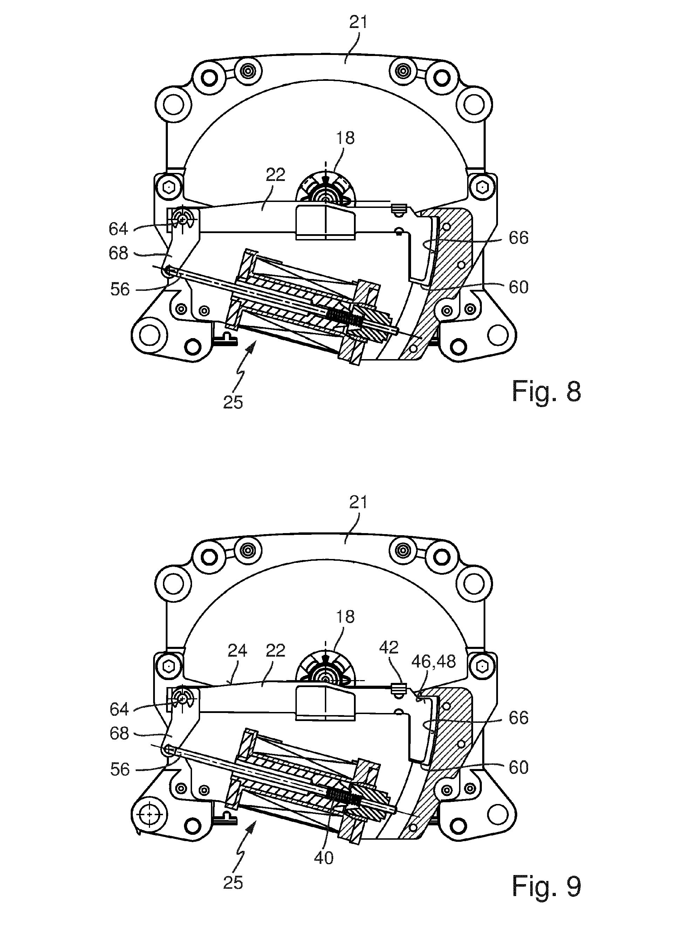

Figur 8 zeigt für den Gegenstand der Fig. 7 eine aus der Richtung der Projektionslinse 27 erfolgende Draufsicht auf den Reflektor 21 mit der Blende 22 und einer von der Blende 22 verdeckten Zusatzblende 60 sowie einem Stellelement 25. Die Blende 22 ist in dem Drehpunkt 64 drehbar gelagert und wird auf ihrer dem Drehpunkt 64 abgewandten Seite in einer Schiene 66 geführt. Figur 8 zeigt die Anordnung aus Blenden 22 und 60 in einer Abblendlichtstellung, in der die Hell-Dunkel-Grenze nur durch die Blendenkante 24 der Blende 22 erzeugt wird. Von der Funktion her entspricht dies der Stellung der Blendenanordnung im Teil c) der Figur 5.

In der Ausgestaltung, die in der Figur 8 dargestellt ist, greift der Anker 56 des Stellelements 25 an einem Hebel 68 an, der in der dargestellten Ausgestaltung ein Teil der Blende 22 ist. Die Schiene 66 weist einen Vorsprung auf, der als Anschlag 46, 48 für die Blende 22 und 60 dient. Von der Zusatzblende 60 ist in der Figur 8 nur ein kleiner Teil zu sehen, da sie von der Blende 22 verdeckt wird. Zu sehen ist zum Beispiel das elastische Element 42, das in einer bevorzugten Ausgestaltung ein Federblechbestandteil der Zusatzblende 60 ist.

Figur 9 zeigt den Gegenstand der Figur 8 in einer Stellung, die der Auslenkung s_42 in der Figur 4 und damit funktional der Blendenanordnung aus der Figur 5b entspricht. Die Blende 22 befindet sich dabei in einer geringfügig aus der in Figur 8 dargestellten Stellung gegen den Uhrzeigersinn herausgedrehten Stellung, während die Zusatzblende 60 weiter am Anschlag 46, 48 anliegt. Die geringfügige Relativbewegung zwischen der Blende 22 und der Zusatzblende 60 sieht man am besten, wenn man in den Figuren 8 und 9 jeweils die Lagen der unteren rechten Enden der Blenden 22 und 60 miteinander vergleicht. Beim Gegenstand der Figur 8 ist ein kleiner Abstand zwischen diesen Lagen erkennbar, während beim Gegenstand der Figur 9 ein solcher Unterschied bereits in der Strichstärke untergeht. Im Ergebnis ist es jedenfalls so, dass die Blende 22 in der Figur 9 rechts etwas abgesenkt ist, während die Zusatzblende 60 weiter am Anschlag 46, 48 anliegt. Durch das leichte Absenken der Blende 22 wird die Hell-Dunkel-Grenze vor dem Scheinwerfer 10 angehoben, um die Reichweite des Lichtes auf der Gegenverkehrsseite zu erhöhen.

Eine dabei unerwünschte Erhöhung der Reichweite auf der Eigenverkehrsseite, mit der eine über Rückspiegel erfolgende Blendung vorausfahrender Verkehrsteilnehmer einhergehen könnte, wird durch die weiter am Anschlag 46, 48 anliegende Zusatzblende 60 verhindert, die beim Gegenstand der Figur 8 noch von der Blende 22 verdeckt wurde und daher nicht optisch wirksam war, während sie beim Gegenstand der Figur 9 auf der rechten Seite nicht mehr durch die dort abgesenkte Blende 22 verdeckt wird und daher dort optisch wirksam ist.

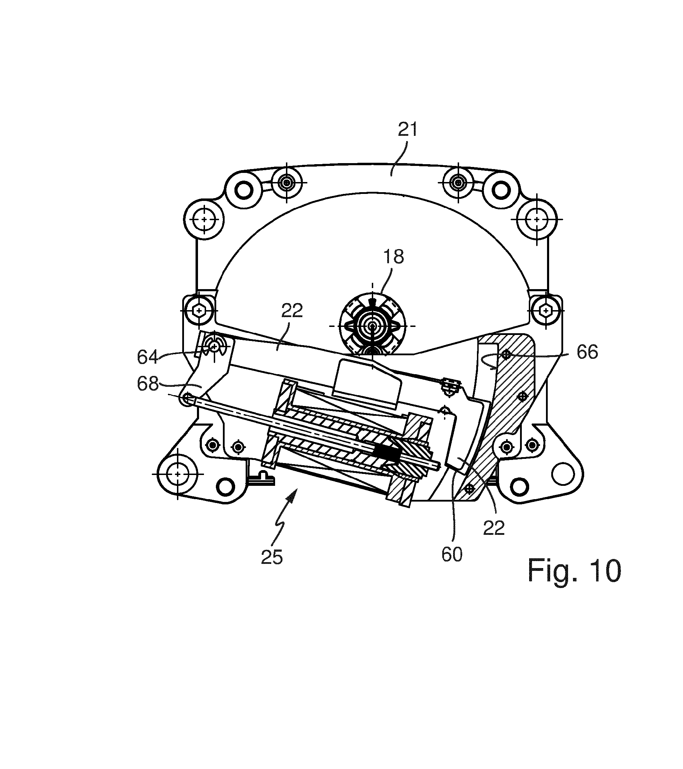

Figur 10 zeigt den Gegenstand der Figuren 8 und 9 mit einer Anordnung der Blenden 22 und 60, die funktional der Stellung der Blenden 22 und 60 aus der Figur 5a entspricht. In dieser Stellung erzeugt das Projektionslichtmodul bei vollständig abgesenkten Blenden 22 und 60 eine Fernlichtverteilung.

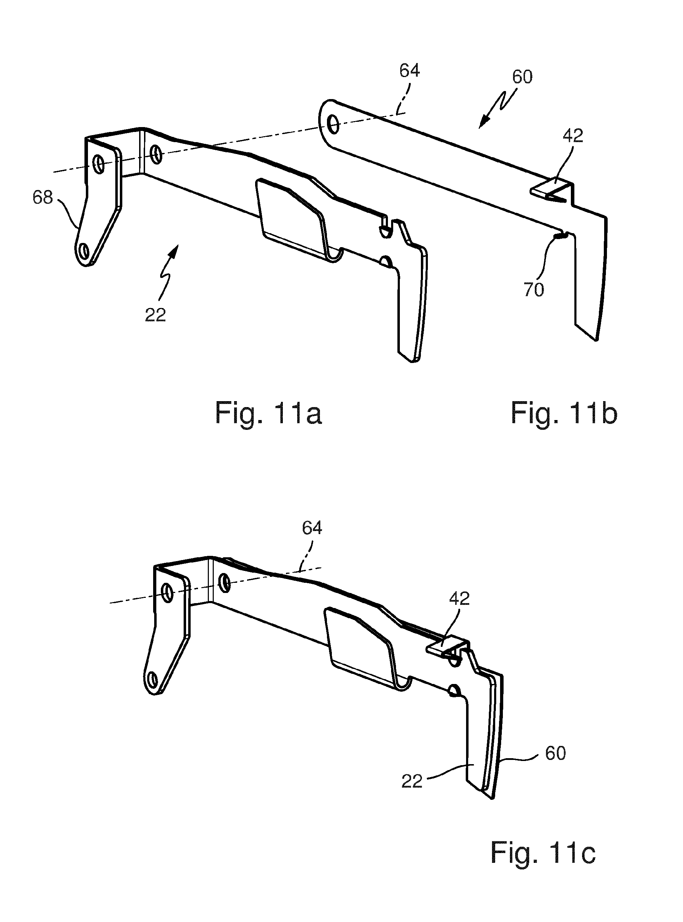

Figur 11 zeigt eine Blendenanordnung mit einer Blende 22 und einer Zusatzblende 60 des Gegenstandes der Figuren 8 bis 10 in einer perspektivischen Ansicht. Die Zusatzblende 60 und die Blende 22 werden um einen gemeinsamen Drehpunkt 64 schwenkbar gelagert. Ein elastisches Element 42 ist als Federblechteil ein Bestandteil der Zusatzblende 60 oder ist an die Zusatzblende 60 angeformt oder an der Zusatzblende 60 sonst wie befestigt. Dem elastischen Element 42 gegenüber liegt ein Mitnehmer 70. Das elastische Element 42 und der Mitnehmer 70 ragen zur selben Seite aus der im Übrigen flächigen Zusatzblende 60 heraus und umfassen im zusammengebauten Zustand die Blende 22. Dabei sind die Abmessungen der Blende 22 so auf den Abstand des elastischen Elementes 42 vom Mitnehmer 70 abgestimmt, dass das elastische Element 42 beim Zusammenfügen der Blende 22 und der Zusatzblende 60 vorgespannt wird. Figur 11 zeigt die Blende 22 und die Zusatzblende 60 in einem zusammengefügten Zustand mit vorgespanntem elastischen Element 42.

Fig. 11 zeigt insbesondere Blenden, deren Blendenkante in Richtung der optischen Achse des Projektionsmoduls keine Krümmung aufweist und rechtwinklig zur optischen Achse ausgerichtet ist. Die optische Achse verläuft in der

Darstellung der Fig. 11 parallel zu der durch den Drehpunkt 64 gehenden gestrichelten Linie. Andere Ausgestaltungen sehen Blenden mit Blendenkanten vor, die in der durch die optische Achse und den Horizont aufgespannten Ebene einen gekrümmten Verlauf aufweisen. Dabei ist bevorzugt, dass die gekrümmte Kontur an die Abbildungseigenschaften der Linse angepasst ist. Besonders bevorzugt ist eine Ausgestaltung, bei der die Blendenkontur dem Verlauf der Petzval-Fläche der Linse folgt.

Die Figuren 12 und 13 veranschaulichen die Relativbewegung zwischen Blende 22 und Zusatzblende 60 bei den Lichtfunktionen Landstraßenlicht oder Abblendlicht in der Figur 12, und Autobahnlicht in der Figur 13. Der im linken Teil der Figuren 12 und 13 jeweils eingekreiste Bereich ist in beiden Figuren auf der rechten Seite der Figur 12 jeweils vergrößert dargestellt. Im Fall der Figur 2a liegt die Zusatzblende 60 vollständig hinter der Blende 22, die alleine die Hell-Dunkel-Grenze bildet. Im Fall der Figur 13 ist die Blende 22 gegenüber der Zusatzblende 22 leicht abgesenkt. Die Hell-Dunkel-Grenze wird dann durch beide Blenden erzeugt. Die Zusatzblende 60 begrenzt auf der eigenen Fahrbahnseite die Lichtverteilung in vertikaler Richtung, um eine Rückspiegelblendung zu vermeiden.

## Patentansprüche

1. Kraftfahrzeugscheinwerfer (10) mit einem Projektionslichtmodul (16), das dazu eingerichtet ist, eine Blendenkante (24) einer Blende (22) des Projektionslichtmoduls (16) als Hell-Dunkel-Grenze einer von dem Projektionslichtmodul (16) erzeugten Lichtverteilung in ein Vorfeld des Scheinwerfers (10) abzubilden, und mit einem Stellelement (25), das mit der Blende (22) mechanisch gekoppelt und dazu eingerichtet ist, eine Stellkraft (F_25) zu erzeugen, mit der die Blende (22) gegen eine Rückstellkraft verstellbar ist, die durch eine Verformung von wenigstens einem elastischen Element erzeugt wird, **dadurch gekennzeichnet, dass** das Projektionslichtmodul (16) zusätzlich zu einem ersten elastischen Element (40) wenigstens ein weiteres elastisches Element (42) aufweist, das unter einer Vorspannung steht und **so** mit dem ersten elastischen Element (40) und der Blende (22) **gekoppelt** ist, **dass es sich** bei einer längs eines ersten Abschnittes eines Verformungsweges (s_25) des ersten elastischen Elements (40) erfolgenden Verformung des ersten elastischen Elements (40) **verformt,** und sich bei einer längs eines zweiten Abschnittes des Verformungsweges (s_25) des ersten elastischen Elements (40) erfolgenden Verformung des ersten elastischen Elements (40) nicht verformt, und dass die bei der jeweiligen Verformung erzeugten und an der Blende (22) angreifenden Rückstellkräfte (F_40, F_42) des ersten elastischen Elements (40) und des wenigstens einen weiteren elastischen Elements (42) in Bezug auf die Richtungen, mit denen sie an der Blende (22) angreifen, entgegengesetzt zueinander gerichtet sind.

2. Scheinwerfer (10) nach Anspruch 1, **dadurch gekennzeichnet, dass** die Rückstellkraft (F_40) des ersten elastischen Elements (40) größer ist als die Rückstellkraft (F_42) des weiteren elastischen Elements (42).

3. Scheinwerfer (10) nach Anspruch 1 oder 2, **dadurch gekennzeichnet, dass** eine Position der Blende (22) bei nicht wirksamem Stellelement (25) durch wenigstens einen einen im Projektionslichtmodul (16) ortsfesten Festanschlag (46) begrenzt wird, so dass sich die Blende (22) bei einem Verschwinden der Stellkraft (F_25) des Stellelements (25) in einer höchstmöglichen Position befindet, in der sie an den dem wenigstens einen Festanschlag (46) anliegt und in der das Projektionslichtmodul (16) eine Abblendlichtverteilung erzeugt.

4. Scheinwerfer (10) nach einem der Ansprüche 1 bis 3, **dadurch gekennzeichnet, dass** das weitere elastische Element (42) mit der verstellbaren Blende (22) verbunden ist.

5. Scheinwerfer (10) nach einem der Ansprüche 1 - 3, **dadurch gekennzeichnet, dass** das weitere elastische Element (42) ortsfest im Projektionslichtmodul (16) angeordnet ist.

6. Scheinwerfer (10) nach Anspruch 1, **dadurch gekennzeichnet, dass** der Scheinwerfer (10) eine mit dem Stellelement (25) verbundene Blende (22) und wenigstens eine relativ zu der Blende (22) bewegbare Zusatzblende (60) aufweist und dass das weitere elastische Element (42) zwischen der Blende (22) und der Zusatzblende (60) angeordnet ist.

7. Scheinwerfer (10) nach einem der vorhergehenden Ansprüche, **dadurch gekennzeichnet, dass** die Blende (22) im Projektionslichtmodul (16) verschiebbar geführt ist.

8. Scheinwerfer (10) nach einem der vorhergehenden Ansprüche, **dadurch gekennzeichnet, dass** die Blende (22) im Projektionslichtmodul (16) drehbar gelagert ist.

9. Scheinwerfer (10) nach einem der Ansprüche 6 bis 8, **dadurch gekennzeichnet, dass** die Zusatzblende (60) einen Mitnehmer (70) der Zusatzblende (60) aufweist, und dass das zweite elastische Element (42) an die Zusatzblende (60) angeformt ist.

10. Scheinwerfer (10) nach einem der vorhergehenden Ansprüche, **dadurch gekennzeichnet, dass** das Stellelement (25) ein Magnetaktor ist, der eine Einstellung von wenigstens zwei von Null verschiedenen Stellkraftwerten erlaubt.

11. Scheinwerfer (10) nach einem der Ansprüche 1 bis 9, **dadurch gekennzeichnet, dass** das Stellelement (25) ein Elektromotor, insbesondere ein Gleichstrommotor ist.

12. Scheinwerfer (10) nach Anspruch 10 oder 11, **dadurch gekennzeichnet, dass** das Projektionsmodul (16) n weitere elastische Elemente aufweist, von denen jedes unter einer Vorspannung steht und so mit dem ersten elastischen Element oder einem anderen der weiteren elastischen Elemente gekoppelt ist, dass es sich bei einer längs eines ersten Abschnittes eines Verformungsweges des ersten elastischen Elements verformt, und sich bei einer längs eines zugeordneten weiteren Abschnittes des Verformungsweges des ersten elastischen Elements erfolgenden Verformung des ersten elastischen Elements nicht verformt, und dass die bei der jeweiligen Verformung erzeugten Rückstellkräfte des ersten elastischen Elements und des weiteren elastischen Elements entgegengesetzt zueinander gerichtet sind.

13. Scheinwerfer (10) nach Anspruch 11, **dadurch gekennzeichnet, dass** das Stellelement dazu eingerichtet ist, bei n plus 1 magnetischen Durchflutungsniveaus betrieben zu werden.

14. Scheinwerfer (10) nach Anspruch 13, **dadurch gekennzeichnet, dass** das Stellelement wenigstens zwei Spulen (L1, L2) aufweist, deren Stromfluss über je einen jeweils einer der Spulen (L1, L2) zugeordneten Schalter (S1, S2) unabhängig voneinander einschaltbar und ausschaltbar ist.

15. Scheinwerfer (10) nach einem der vorhergehenden Ansprüche, **dadurch gekennzeichnet, dass** eine Vorspannung von wenigstens einem der elastischen Elemente einstellbar ist.

16. Scheinwerfer (10) nach einem der vorhergehenden Ansprüche, **dadurch gekennzeichnet, dass** die Lage eines im Projektionslichtmodul (16) bei einer Bewegung des Stellelements (25) ortsfesten Anschlags (46, 48), der eine Bewegung einer Blende (22) oder Zusatzblende (60) begrenzt, einstellbar ist.
